# EUROPEAN PATENT SPECIFICATION

(11) **EP 1 803 593 B1**
(45) Date of publication and mention of the grant of the patent: **17.09.2008**
(21) Application number: 06127226.6
(22) Date of filing: 27.12.2006
(51) Int. Cl.: B60H 1/32

(54) **Air conditioning systems for vehicles**
Klimaanlagensysteme für Fahrzeuge
Systèmes de climatisation pour véhicules

(30) Priority: 28.12.2005 JP 2005377877
(43) Date of publication of application: 04.07.2007
(73) Proprietor: Sanden Corporation, Isesaki-shi, Gunma 372-8502 (JP)
(72) Inventor: Matsumoto, Yuuichi c/o Sanden Corporation, Isesaki-shi Gunma 372-8502 (JP); Suzuki, Kenichi c/o Sanden Corporation, Isesaki-shi Gunma 372-8502 (JP); Tsuboi, Masato c/o Sanden Corporation, Isesaki-shi Gunma 372-8502 (JP)
(74) Representative: Haley, Stephen

(56) References cited:
- WO-A-00/71944
- FR-A- 2 853 016
- JP-A- 11 193 967
- JP-A- 59 038 123

## Description

The present invention relates to air conditioning systems for vehicles, and specifically, to air conditioning systems for vehicles using a natural refrigerant, such as carbon dioxide.

Use of freon-based refrigerants in air conditioning systems for vehicles has been restricted due to environmental concerns. As a result, natural refrigerants, such as carbon dioxide, are being used as a replacement for freon-based refrigerants. Carbon dioxide refrigerant is non-toxic and non-combustible, but the temperature of refrigerant discharged from a compressor is relatively high, and the theoretical energy efficiency of carbon dioxide as a refrigerant is relatively low. To improve the energy efficiency of refigerant, a heat exchanger is provided for performing heat exchange between refrigerant at an exit side of a radiator and refrigerant drawn into a compressor, as shown in Japanese Patent Publication No. H11-193967 A, which is considered as the closest prior art. The resulting heat exchange between higher pressure refrigerant and lower pressure refrigerant reduces both the specific enthalpy of the lower pressure refrigerant at the exit side of the radiator and the pressure elevation of the higher pressure refrigerant at the compressor, thereby improving the efficiency of the refrigeration cycle.

Nevertheless, when the outside air temperature exceeds a critical temperature of carbon dioxide (about 32°C), which may occur frequently when air conditioning is desired, during an idling operation, a thermal load on a refrigeration cycle, in particular, a radiator (e.g., a gas cooler) thereof, increases, and a temperature of refrigerant at a suction side of a compressor rises, which may result in superheating of the refrigerant. In such a condition, the heat radiation ability of an internal heat exchanger is reduced, and it may become difficult to lower the temperature of refrigerant at the exit side of the radiator sufficient for adequate air conditioning or cooling effect. Even if the refrigerant is passed through a pressure reducer and then evaporated by an evaporator in such a superheated state, the refrigerating ability of the air conditioning system may be significantly decreased.

Therefore, a need has arisen for air conditioning systems for vehicles that overcomes these and other shortcomings of the related art. A technical advantage of the present invention is that a second refrigeration cycle may be provided for performing heat exchange with refrigerant at an exit side of a radiator in the first refrigeration cycle, the refrigerant at the exit side of the radiator is not cooled by the refrigerant in the same cycle, but the temperature of the refrigerant at the exit side of the radiator is lowered using a new heat medium disposed in a second refrigeration cycle, which may be a cascade cycle relative to the first cycle, thereby increasing the refrigeration ability during an idling operation at elevated outside air temperatures. Another technical advantage of the present invention is that energy of the compressed refrigerant may be harnessed to power a compressor in the second refrigeration cycle, thereby obviating the need for an additional power source for the second refrigeration cycle. This may further improve an energy efficiency of the air conditioning system. Yet another technical advantage of the present invention is that the heat exchanger may use an opposing flow of refrigerant from the second refigerant cycle, instead of air cooling-type arrangement, to reduce the refrigerant temperature, thereby reducing tube length and providing a heat exchanger of reduced size that is suitable for mounting within the restricted space of a vehicle.

According to an embodiment of the invention, air conditioning systems for vehicles may comprise a first refrigeration cycle, an expander, and a second refrigeration cycle. The first refrigeration cycle may comprise a first compressor for compressing refrigerant, a first radiator fluidly connected to the compressor and configured to radiate heat from the refrigerant, a pressure reduction mechanism configured to reduce a pressure of refrigerant from the first radiator; an evaporator configured to evaporate an amount of refrigerant, and a gas/liquid separator configured to separate evaporated refrigerant from refrigerant in a liquid state. The expander may be disposed on a first fluid communication path between an outlet of the first radiator and an inlet of the first pressure reduction mechanism. The second refrigeration cycle, which may be a cascade cycle relative to the first refrigeration cycle, may comprise a second compressor powered by a pressure reduction and expansion energy of refrigerant resulting from an adiabatic expansion of the refrigerant carried out by the expander.

According to another embodiment of the invention, a method is provided for improving the energy efficiency of a natural refrigerant utilized in a vehicle air conditioner. The method may comprise the steps of performing a first refrigeration cycle and of performing a second refrigeration cycle. The first refrigeration cycle may comprise the substeps of compressing a first, natural refrigerant, radiating heat from the compressed natural refrigerant, expanding the compressed natural refrigerant, harnessing energy resulting from the expansion of the natural refrigerant, reducing a pressure of the radiated, compressed natural refrigerant; evaporating an amount of natural refrigerant, and separating evaporated refrigerant from refrigerant in a liquid state. The second refrigeration cycle, which may be a cascade cycle relative to the first refrigeration cycle, may comprise the substep of compressing a second refrigerant using energy harnessed from the expansion of the natural refrigerant.

Other objects, features, and advantages of the present invention will be apparent to persons of ordinary skill in the art in view of the foregoing detailed description of the invention and the accompanying drawings.

For a more complete understanding of the present invention, needs satisfied thereby, and the objects, features, and advantages thereof, reference now is made to the following description taken in connection with the accompanying drawings.

Fig. 1 is a circuit diagram of a refrigeration cycle in an air conditioning system for a vehicle, according to an embodiment of the present invention.

Fig. 2 is a cross-sectional view of the expander and the second compressor of Fig. 1, according to an embodiment of the present invention.

Fig. 3 is a perspective view showing an example of a double tube heat exchanger of Fig. 1, according to an embodiment of the present invention.

Figs. 4A and 4B are a plan view and an elevational view, respectively, of the integrated radiator, according to an embodiment of the present invention.

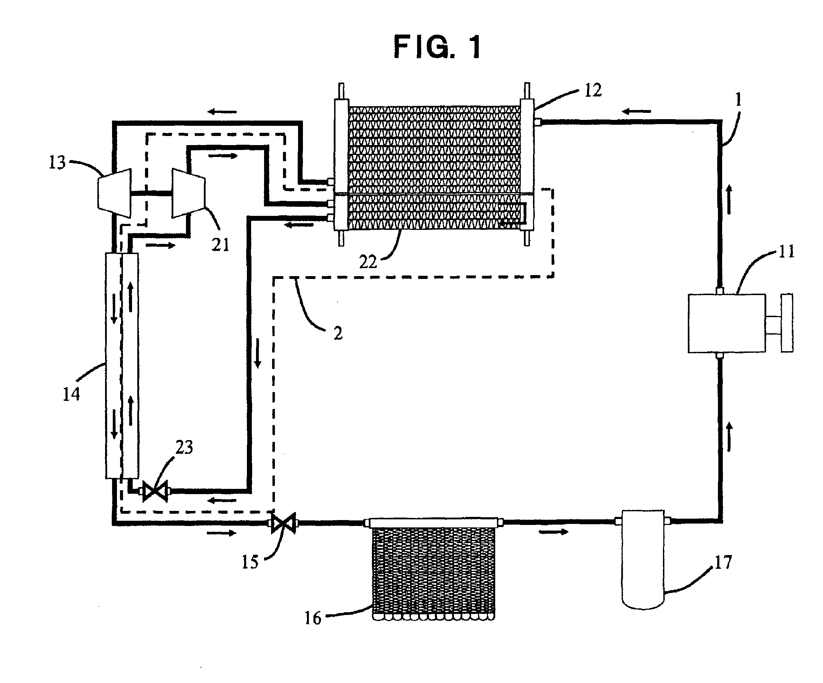

Preferred embodiments of the present invention, and their features and advantages, may be understood by referring to Figs. 1-4B, like numerals being used for corresponding parts in the various drawings.

Referring to Fig. 1, a refrigeration cycle 1 may be a refrigeration cycle for cooling an interior of a vehicle. In this first refrigeration cycle 1, a first compressor 11 for compressing refrigerant and a first radiator 12, which may be a gas cooler, for radiating heat from refrigerant may be provided. An expander 13 for reducing a pressure of and expanding refrigerant volume may be provided at a downstream position of first radiator 12 in the refrigerant flow direction. Expander 13 may be configured to harness energy resulting from the pressure reduction and expansion part of a pressure reducing process for refrigerant, which may be due to adiabatic expansion at expander 13 that is isoentropic, thereby permitting harnessing of the resultant energy. Generally, using a known expansion valve for expansion of refrigerant may result in an isoenthalpic change that is not as suitable for harnessing to perform work.

A heat exchanger 14 may be provided at a position downstream of expander 13, heat exchanger 14 may serve as an evaporator in a second refrigeration cycle 2 and may provide a heat exchange between refrigerant in first refrigeration cycle 1 and refrigerant in second refrigeration cycle 2. In Fig. 1, heat exchanger 14 is depicted as a double tube heat exchanger, which is described later. Second refrigeration cycle 2 may be a cascade cycle for performing heat exchange with first refrigeration cycle 1. A first pressure reducer 15, which may be an expansion valve or a throttle valve, may be provided in first refrigeration cycle 1 for reducing the pressure of refrigerant after passing through heat exchanger 14. An evaporator 16 then may evaporate an amount of refrigerant reduced in pressure by first pressure reducer 15. At a position downstream of evaporator 16, a gas/liquid separator 17 may be provided for separating the evaporated refrigerant from the refrigerant remaining in a liquid state, so that evaporated refrigerant may be sent to first compressor 11. Liquid refrigerant may be stored in the gas/liquid separator 17. A natural refrigerant, such as carbon dioxide, is preferred for the refrigerant for first refrigeration cycle 1. A hydrofluorocarbon ("HFC") refrigerant, hydrocarbon ("HC") refrigerant, or a natural refrigerant may be used for second refrigeration cycle 2, but HFC134a is preferred when a natural refrigerant is used as the refrigerant for first refrigeration cycle 1.

The pressure reduction and expansion energy recovered by expander 13 may be harnessed to power a second compressor 21 of second refrigeration cycle 2. In second refrigeration cycle 2, refrigerant may be compressed by second compressor 21, and the heat may be radiated from the compressed refrigerant by second radiator 22. Second radiator 22 may be formed as a structure integrated with first radiator 12. Refrigerant radiated by second radiator 22 may be passed through second pressure reducer 23, which also may be an expansion valve or a throttle valve, and thereafter, refrigerant may be evaporated by double tube heat exchanger 14 due to a heat exchange with refrigerant in first refrigerant cycle 1. As a result of heat exchange between the refrigerant in first refrigeration cycle 1 and the refrigerant in second refrigeration cycle 2 at double tube heat exchanger 14, the temperature of refrigerant may be reduced from the potentially superheated state at the outlet of first radiator 12. Alternatively, an orifice tube may be used in lieu of second pressure reducer 23 to reduce costs. Nevertheless, in consideration of load variation in second refrigeration cycle 2, it is preferred to provide a buffer function to double tube heat exchanger 14.

In view of the first law of thermodynamics, i.e., the law of energy conservation, the exchanged quantities of heat in heat exchanger 14 between first refrigeration cycle 1 and second refrigeration cycle 2 may be substantially or about the same. Further, the energy harnessed from the adiabatic expansion, i.e., isoentropic expansion, at expander 13 may be substantially or about equal to the power inputted to second compressor 21.

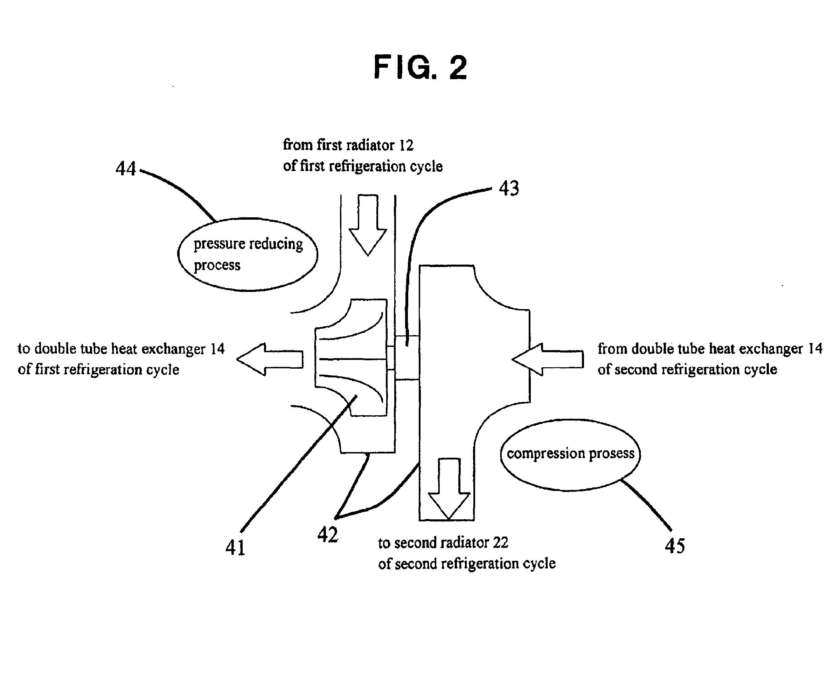

Referring to Fig. 2, second compressor 21 may be connected directly to expander 13. Impellers 41, which may be turbine impellers similarly in an exhaust gas turbine supercharger, may be provided in each of expander 13 and second compressor 21, and further may be coupled by a shaft 43. Each of respective impellers 41 may be disposed within casings 42. A pressure reducing process 44 of first refrigeration cycle 1 may occur in a route from first radiator 12 to heat exchanger 14, and an associated compression process 45 of second refrigeration cycle 2 may occur in a route from heat exchanger 14 to second radiator 22. As described above, because the pressure reduction and expansion energy recovered at pressure reducing process 44 may be used for compression process 45, an additional power source is not necessary for driving and circulating refrigerant of second refrigeration cycle 2, and the recovered energy may be effectively harnessed.

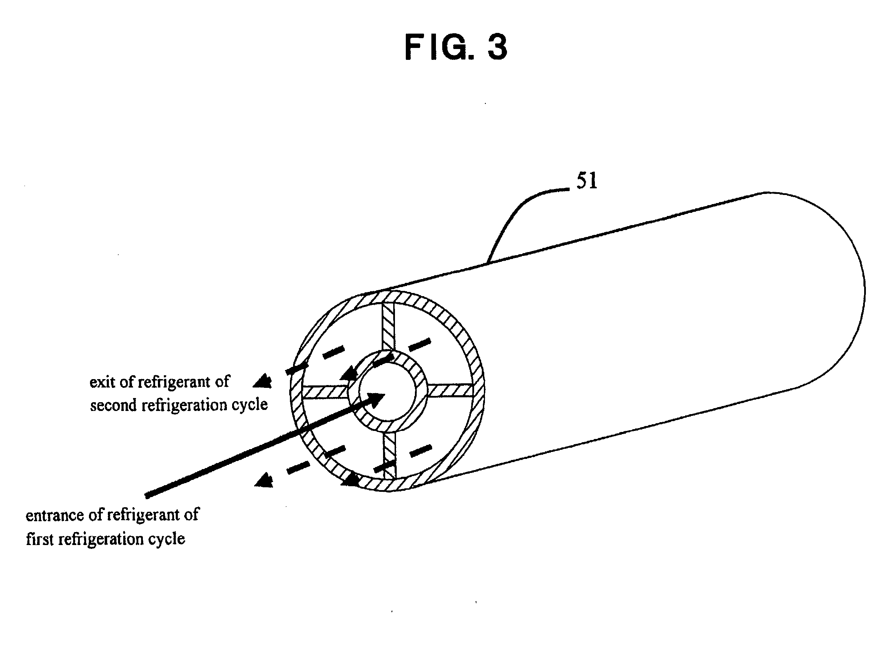

Referring to Fig. 3, heat exchanger 14 may be a double tube heat exchanger 51. The heat exchange between the refrigerant passed through expander 13 of first refrigeration cycle 1 and the refrigerant passed through second pressure reducer 23 of second refrigeration cycle 2 may be performed at a counter flow condition. By using a double tube, heat exchanger 51, as compared with another known air cooling-type heat exchanger, a necessary tube length may be shortened, which is advantageous for mounting heat exachanger 51 within a space of a vehicle that is restricted in shape and dimension. Further, increase of the efficiency of heat exchange between refrigerant of first and second refrigerant cycles 1, 2 may be expected due to the counter flow structure. Nevertheless, the structure of heat exchanger 14 is not limited to the structure of double tube, heat exchanger 51, which may be any suitable structure for permitting heat exchange between refrigerant of first and second refrigerant cycles 1, 2.

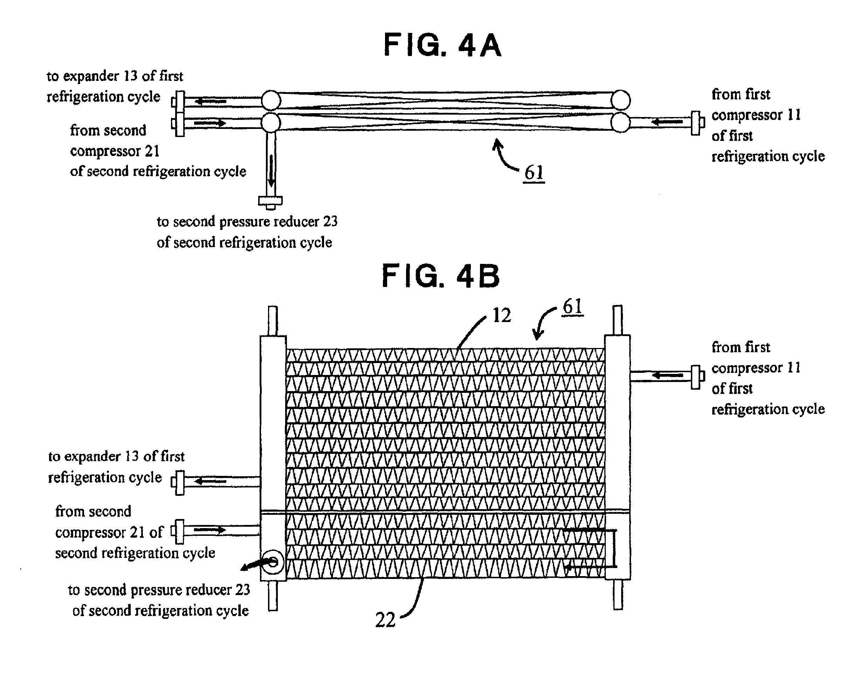

Referring to Figs. 4A and 4B, first radiator 12 and second radiator 22 may be integrated with each other to form an integrated radiator 61. Because the temperature of refrigerant discharged from a compressor is relatively high, i.e. potentially superheated above a critical point, in a case of carbon dioxide refrigerant, integrated radiator 61 may comprise a structure for increasing an area for heat exchange, such as by increasing the number of paths or turns. An integrated structure for the respective radiators may be desirable for mounting an air conditioning system including such an integrated radiator arrangement within the restricted space of a vehicle interior.

In air conditioning systems for vehicles thus constructed, even during an idling operation at an elevated outside air temperature, the refrigeration ability of evaporator 16 may be increased because the temperature of refrigerant at the exit side of first radiator 12 of first refrigeration cycle 1 is reduced by the heat exchange with refrigerant of second refrigeration cycle 2 at heat exchanger 14. Further, because the refrigerant drawn into first compressor 11 is not heated, the specific volume of refrigerant vapor drawn into the compressor may be reduced and the volume efficiency of the compressor is increased, thereby reducing the compressor's power requirements. Moreover, the second refrigeration cycle 2 may be driven without a new power source because the compressor power of first refrigeration cycle 1 may be recovered by expander 13 and may be utilized as the power source for second refrigeration cycle 2. Therefore, the coefficient of performance as a whole of the refrigeration cycle may be increased, and a refrigeration cycle with a significantly increased energy efficiency may be achieved.

Air conditioning systems for vehicles according to the present invention may be suitable, in particular, for air conditioning systems comprising a refrigeration cycle using carbon dioxide refrigerant, which has a relatively low critical point and may be prone to superheating.

## Claims

1. An air conditioning system for a vehicle, comprising:
a first refrigeration cycle (1) comprising:
a first compressor (11) for compressing refrigerant;
a first radiator (12) fluidly connected to said compressor (11), said first radiator (12) configured to radiate heat of refrigerant compressed by said first compressor (11);
a first pressure reduction mechanism (15) configured to reduce a pressure of refrigerant from said first radiator (12);
an evaporator (16) fluidly connected to said first pressure reduction mechanism (15), said evaporator configured to evaporate an amount of refrigerant reduced in pressure by said first pressure reduction mechanism; and
a gas/liquid separator (17) fluidly connected to said evaporator (16), said gas/liquid separator configured to separate evaporated refrigerant received from refrigerant in a liquid state; **characterized in that** said first refrigeration cycle (1) comprises
an expander (13) disposed on a first fluid communication path between an outlet of said first radiator (12) and an inlet of said first pressure reduction mechanism (15); and **in that**
a second refrigeration cycle (2) is provided as a cascade cycle relative to said first refrigeration cycle (1), said second refrigeration cycle (2) comprising a second compressor (21) powered by a pressure reduction and expansion energy of refrigerant resulting from an adiabatic expansion of refrigerant by said expander (13).

2. The air conditioning system of claim 1, wherein said second refrigeration cycle (2) further comprises:
a second radiator (22) fluidly connected to said second compressor (21), said second radiator (22) configured to radiate heat of refrigerant compressed by said second compressor (21);
a second pressure reduction mechanism (23) configured to reduce a pressure of refrigerant from said second radiator (22); and
a heat exchanger (14) disposed on a second fluid communication path between an outlet of said second pressure reduction mechanism (23) and an inlet of said second compressor (21), said heat exchanger (14) configured to exchange heat between refrigerant on the first fluid communication path and refrigerant on the second fluid communication path.

3. The air conditioning system of claim 2, wherein said expander (13) comprises an expansion impeller (41).

4. The air conditioning system of claim 3, wherein said expansion impeller (41) is operatively connected to a compression mechanism of said second compressor.

5. The air conditioning system of claim 4, wherein said compression mechanism is a compression impeller (41) driven by said expansion impeller (41).

6. The air conditioning system of claim 2, wherein said second radiator (22) is integrated with said first radiator (12).

7. The air conditioning system of claim 2, wherein said heat exchanger (14) comprises a portion disposed on the first fluid communication path.

8. The air conditioning system of claim 7, wherein the portion of the first fluid communication path is disposed within the second fluid communication path.

9. The air conditioning system of claim 2, wherein one of said first (15) and second (23) pressure reduction mechanisms is an expansion valve.

10. The air conditioning system of claim 1, wherein a refrigerant used in said second refrigeration cycle (2) comprises a refrigerant selected from the group consisting of an HFC group refrigerant, an HC group refrigerant, and a natural refrigerant.

11. The air conditioning system of claim 1, wherein a refrigerant used in said first refrigeration cycle (1) comprises carbon dioxide.

12. A method for improving the energy efficiency of a natural refrigerant utilized in a vehicle air conditioner, the method comprising the steps of:
performing a first refrigeration cycle (1) comprising the substeps of:
compressing a first, natural refrigerant;
radiating heat from the compressed natural refrigerant;
expanding the compressed natural refrigerant after the radiating step;
harnessing energy resulting from the expansion of the natural refrigerant;
reducing a pressure of the radiated, compressed natural refrigerant;
evaporating an amount natural refrigerant; and
separating evaporated refrigerant from refrigerant in a liquid state; and
performing a second refrigeration cycle (2) as a cascade cycle relative to the first refrigeration cycle, the second refrigeration cycle comprising the substep of compressing a second refrigerant utilizing energy provided by the harnessing step.

13. The method of claim 12, wherein the second refrigeration cycle (2) further comprises the steps of:
radiating heat from the compressed refrigerant;
reducing a pressure of the compressed, radiated refrigerant; and
exchanging heat between the natural refrigerant of the first refrigeration cycle and the refrigerant of the second refrigeration cycle.

14. The method of claim 13, wherein the second refrigerant of the second refrigeration cycle (2) comprises a refrigerant selected from the group consisting of an HFC group refrigerant, an HC group refrigerant, and a natural refrigerant.

15. The method of claim 14, wherein the first, natural refrigerant of the first refrigeration cycle (1) comprises carbon dioxide.

## Patentansprüche

1. Klimaanlagensystem für ein Fahrzeug, enthaltend:
einen ersten Kühlkreislauf (1), enthaltend:
einen ersten Verdichter (11) zum Verdichten von Kühlmittel;
einen ersten Radiator (12), der mit dem Verdichter (11) fluidisch verbunden ist und der so gestaltet ist, dass er Wärme des von dem ersten Verdichter (11) verdichteten Kühlmittels abstrahlt;
einen ersten Druckverminderungsmechanismus (15), der dazu ausgestaltet ist, einen Druck des Kühlmittels von dem ersten Radiator (12) zu vermindern;
einen Verdampfer (16), der mit dem ersten Druckverminderungsmechanismus (15) fluidisch verbunden und dazu ausgestaltet ist, eine Menge an Kühlmittel zu verdampfen, dessen Druck durch den ersten Druckverminderungsmechanismus vermindert worden ist; und
einen Gas/Flüssigkeit-Separator (17), der mit dem Verdampfer (16) fluidisch verbunden und dazu ausgestaltet ist, entgegengenommenes verdampftes Kühlmittel von Kühlmittel in flüssigem Zustand zu trennen, **dadurch gekennzeichnet, dass** der erste Kühlkreislauf (1) enthält:
ein Entspannungsgefäß (13), das in einem ersten Fluidverbindungsweg zwischen einem Auslass des ersten Radiators (12) und einem Einlass des ersten Druckverminderungsmechanismus (15) angeordnet ist, und dass
ein zweiter Kühlkreislauf (2) als ein Kaskadenkreislauf bezüglich des ersten Kühlkreislaufs (1) vorgesehen ist, welcher zweite Kühlkreislauf (2) einen zweiten Verdichter (21) enthält, der durch eine Druckverminderungs- und Ausdehnungsenergie von Kühlmittel betrieben ist, die von einer adiabatischen Ausdehnung von Kühlmittel durch das Ausdehnungsgefäß (13) herrührt.

2. Klimaanlagensystem nach Anspruch 1, bei dem der zweite Kühlkreislauf (2) weiterhin enthält:
einen zweiten Radiator (22), der mit dem zweiten Verdichter (21) fluidisch verbunden ist und der dazu gestaltet ist, Wärme des von dem zweiten Verdichter (21) verdichteten Kühlmittels abzustrahlen;
einen zweiten Druckverminderungsmechanismus (23), der dazu gestaltet ist, einen Druck des Kühlmittels von dem zweiten Radiator (22) zu vermindern; und
einen Wärmetauscher (14), der in einem zweiten Fluidverbindungsweg zwischen einem Auslass des zweiten Druckverminderungsmechanismus (23) und einem Einlass des zweiten Verdichters (21) angeordnet ist und der dazu ausgestaltet ist, Wärme zwischen Kühlmittel im ersten Fluidverbindungsweg und Kühlmittel im zweiten Fluidverbindungsweg auszutauschen.

3. Klimaanlagensystem nach Anspruch 2, bei dem das Entspannungsgefäß (13) ein Entspannungslaufrad (41) enthält.

4. Klimaanlagensystem nach Anspruch 3, bei dem das Entspannungslaufrad (41) wirkungsmäßig mit einem Verdichtungsmechanismus des zweiten Verdichters verbunden ist.

5. Klimaanlagensystem nach Anspruch 4, bei dem der Verdichtermechanismus ein Verdichterlaufrad (41) ist, das von dem Entspannungslaufrad (41) angetrieben ist.

6. Klimaanlagensystem nach Anspruch 2, bei dem der zweite Radiator (22) mit dem ersten Radiator (12) integriert ist.

7. Klimaanlagensystem nach Anspruch 2, bei dem der Wärmetauscher (14) einen Abschnitt umfasst, der im ersten Fluidverbindungsweg angeordnet ist.

8. Klimaanlagensystem nach Anspruch 7, bei dem der Abschnitt des ersten Fluidverbindungsweges innerhalb des zweiten Fluidverbindungsweges angeordnet ist.

9. Klimaanlagensystem nach Anspruch 2, bei dem eines der ersten (15) und zweiten (23) Durckverminderungsmechanismen ein Entspannungsventil ist.

10. Klimaanlagensystem nach Anspruch 1, bei dem ein im zweiten Kühlkreislauf (2) verwendetes Kühlmittel ein Kühlmittel umfasst, das aus der Gruppe ausgewählt ist, die aus einem Kühlmittel der HFC-Gruppe, einem der HC-Gruppe und einem natürlichen Kühlmittel besteht.

11. Klimaanlagensystem nach Anspruch 1, bei dem ein in den ersten Kühlkreislauf (1) verwendetes Kühlmittel Kohlendioxid enthält.

12. Verfahren zum Verbessern der Energieeffizienz eines natürlichen Kühlmittels, das in einer Fahrzeugklimaanlage verwendet wird, umfassend die Schritte:
Ausführen eines ersten Kühlkreislaufs (1), enthaltend die Unterschritte:
Verdichten eines ersten, natürlichen Kühlmittels;
Abstrahlen von Wärme von dem verdichteten natürlichen Kühlmittel;
Entspannen des verdichteten natürlichen Kühlmittels nach dem Abstrahlschritt;
Ausnutzen der Energie, die aus der Entspannung des natürlichen Kühlmittels resultiert;
Vermindern eines Drucks des verdichteten natürlichen Kühlmittels nach dem Abstrahlschritt;
Verdampfen einer Menge natürlichen Kühlmittels; und
Trennen verdampften Kühlmittels von Kühlmittel im flüssigen Zustand; und
Ausführen eines zweiten Kühlkreislaufs (2) als ein Kaskadenkreislauf bezüglich des ersten Kühlkreislaufs, wobei der zweite Kühlkreislauf den Unterschritt des Verdichtens eines zweiten Kühlmittels unter Ausnutzung von Energie umfasst, die durch den Schritt der Nutzbarmachung geliefert wird.

13. Verfahren nach Anspruch 12, bei dem der zweite Kühlkreislauf (2) weiterhin die Schritte umfasst:
Abstrahlen von Wärme von dem verdichteten Kühlmittel;
Herabsetzen eines Drucks des verdichteten Kühlmittels nach dem Abstrahlen von Wärme; und
Wärmetauschen zwischen dem natürlichen Kühlmittel des ersten Kühlkreislaufs und dem Kühlmittel des zweiten Kühlkreislaufs.

14. Verfahren nach Anspruch 13, bei dem das zweite Kühlmittel des zweiten Kühlkreislaufs (2) ein Kühlmittel enthält, das aus der Gruppe ausgewählt ist, die besteht aus einem Kühlmittel der HFC-Gruppe, einem Kühlmittel der HC-Gruppe und einem natürlichen Kühlmittel.

15. Verfahren nach Anspruch 14, bei dem das erste, natürliche Kühlmittel des ersten Kühlkreislaufs (1) Kohlendioxid enthält.

## Revendications

1. Système de climatisation pour véhicule, comprenant:
un premier cycle (1) de réfrigération comprenant
un premier compresseur (11) pour comprimer un fluide frigorigène;
un premier radiateur (12) relié pour un fluide audit compresseur (11), ledit premier radiateur (12) étant configuré pour rayonner la chaleur du fluide frigorigène comprimé par ledit premier compresseur (11);
un premier mécanisme (15) détendeur de pression configuré pour détendre un fluide frigorigène provenant dudit premier radiateur (12):
un évaporateur (16) relié pour un fluide audit premier mécanisme (15) détendeur de pression, ledit évaporateur étant configuré pour évaporer une quantité de fluide frigorigène dont la pression a été réduite par ledit premier mécanisme détendeur de pression; et
un séparateur (17) gaz/liquide relié pour un fluide audit évaporateur (16), ledit séparateur gaz/liquide étant configuré pour séparer le fluide frigorigène évaporé qu'il reçoit, du fluide frigorigène à l'état liquide; **caractérisé en ce que** ledit premier cycle de réfrigération (1) comprend
un détendeur (13) disposé dans un premier trajet de circulation de fluide entre une sortie dudit premier radiateur (12) et une entrée dudit premier mécanisme (15) détendeur de pression; et **en ce que**
un second cycle de réfrigération (2) est prévu comme un cycle en cascade par rapport audit premier cycle de réfrigération (1), ledit second cycle de réfrigération (2) comprenant une second compresseur (21) entraîné par une énergie de détente et d'expansion du fluide frigorigène, résultant d'une expansion adiabatique du fluide frigorigène par ledit détendeur (13).

2. Système de climatisation selon la revendication 1, dans lequel ledit second cycle de réfrigération (2) comprend en outre
un second radiateur (22) relié pour un fluide audit second compresseur (21), ledit second radiateur (22) étant configuré pour rayonner la chaleur du fluide frigorigène comprimé par ledit second compresseur (21);
un second mécanisme (23) détendeur de pression configuré pour détendre un fluide frigorigène provenant dudit second radiateur (22): et
un échangeur de chaleur (14) disposé dans un second trajet de circulation de fluide entre une sortie dudit second mécanisme (23) détendeur de pression et une entrée dudit second compresseur (21), ledit échangeur de chaleur (14) étant configuré pour échanger de la chaleur entre un fluide frigorigène dans ledit premier trajet de circulation de fluide et un fluide frigorigène dans le second trajet de circulation de fluide.

3. Système de climatisation selon la revendication 2, dans lequel ledit détendeur (13) comprend un impulseur d'expansion (41).

4. Système de climatisation selon la revendication 3, dans lequel ledit impulseur d'expansion (41) est relié de manière fonctionnelle à un mécanisme de compression dudit second compresseur.

5. Système de climatisation selon la revendication 4, dans lequel ledit mécanisme de compression est un impulseur de compression (41) mené par ledit impulseur d'expansion (41).

6. Système de climatisation selon la revendication 2, dans lequel ledit second radiateur (22) est intégré audit premier radiateur (12).

7. Système de climatisation selon la revendication 2, dans lequel ledit échangeur de chaleur (14) comprend une portion disposée dans le premier trajet de circulation de fluide.

8. Système de climatisation selon la revendication 7, dans lequel la portion du premier trajet de circulation de fluide est disposée à l'intérieur du second trajet de circulation de fluide.

9. Système de climatisation selon la revendication 2, dans lequel l'un parmi ledit premier (15) et ledit second (23) mécanismes détendeurs de pression est une vanne de détente.

10. Système de climatisation selon la revendication 1, dans lequel un fluide frigorigène utilisé dans ledit second cycle de réfrigération (2) comprend un fluide frigorigène choisi dans le groupe formé d'un fluide frigorigène du groupe des HFC (hydrofluorocarbones), d'un fluide frigorigène du groupe des HC (hydrocarbures) et d'un fluide frigorigène naturel.

11. Système de climatisation selon la revendication 1, dans lequel un fluide frigorigène utilisé dans ledit premier cycle de réfrigération (1) comprend du dioxyde de carbone.

12. Procédé pour améliorer le rendement énergétique d'un fluide frigorigène naturel utilisé dans un climatiseur de véhicule, le procédé comprenant les étapes consistant à:
réaliser un premier cycle de réfrigération (1), comprenant les sous-étapes consistant à:
comprimer un premier fluide frigorigène naturel,
rayonner de la chaleur du fluide frigorigène naturel comprimé;
détendre le fluide frigorigène naturel comprimé après l'étape de rayonnement,
coupler une énergie résultant de la détente du fluide frigorigène naturel;
détendre le fluide frigorigène naturel après compression et rayonnement
évaporer une quantité de fluide frigorigène naturel, et
séparer un fluide frigorigène évaporé d'un fluide frigorigène dans un état liquide; et
réaliser un second cycle de réfrigération (2) comme un cycle en cascade par rapport au premier cycle de réfrigération, le second cycle de réfrigération comprenant la sous-étape consistant à comprimer un second fluide frigorigène en utilisant de l'énergie produite par l'étape de couplage.

13. Procédé selon la revendication 12, dans lequel le second cycle de réfrigération (2) comprend en outre les étapes consistant à:
rayonner de la chaleur du fluide frigorigène comprimé;
détendre le fluide frigorigène après compression et rayonnement; et
échanger de la chaleur entre le fluide frigorigène naturel du premier cycle de réfrigération et le fluide frigorigène du second cycle de réfrigération.

14. Procédé selon la revendication 13, dans lequel le second fluide frigorigène du second cycle de réfrigération (2) comprend un fluide frigorigène choisi dans le groupe forme d'un fluide frigorigène du groupe des HFC (hydrofluorocarbones), d'un fluide frigorigène du groupe des HC (hydrocarbures) et d'un fluide frigorigène naturel.

15. Procédé selon la revendication 14, dans lequel le premier fluide frigorigène naturel du premier cycle de réfrigération (1) comprend du dioxyde de carbone.
